# EUROPEAN PATENT SPECIFICATION

(11) **EP 2 785 929 B1**
(45) Date of publication and mention of the grant of the patent: **17.08.2016**
(21) Application number: 12809836.5
(22) Date of filing: 30.11.2012
(51) Int. Cl.: E04C 2/20, E04F 15/16, B32B 3/30, B32B 27/08, B32B 27/20, B32B 27/30

(54) **ANTI-SKID FLOOR COVERING**
RUTSCHFESTER BODENBELAG
REVETEMENT DE SOL ANTI-DERAPANT

(30) Priority: 30.11.2011 GB 201120627
(43) Date of publication of application: 08.10.2014
(73) Proprietor: James Halstead PLC, Manchester, Greaster Manchester M26 1JN (GB)
(72) Inventor: BARKER, Nicholas, Manchester Greater Manchester M26 1JN (GB)
(74) Representative: Wilson Gunn
(86) International application number: PCT/GB2012/052953
(87) International publication number: WO 2013/079950

(56) References cited:
- WO-A1-03/012191
- WO-A1-2006/088414
- BE-A3- 1 016 807
- GB-A- 2 461 317
- Dagmar Hülsenberg: "ID=RD-16-00442, Partikelgrößenverteilung", RÖMPP Online, Version 3.29, 1 December 2011 (2011-12-01), pages 1-4, XP055052700, Retrieved from the Internet: URL:http://www.roempp.com/prod/roempp.php [retrieved on 2013-02-07]

## Description

The present invention relates to a floor covering having sustainable slip-resistance properties.

Safety flooring is provided in areas to reduce the risk of slips or falls. Safety flooring should reduce the risk of a slip to low level. This is particularly important in establishments that have areas which are normally dry but which may also be prone to liquid spillages, such as those where beverages are sold, or anywhere where liquids may be regularly found on the floor. These establishments hence require floor coverings which offer an enhanced slip resistance in order to reduce the likelihood of accidents caused by people slipping. Reducing the slip risk is done by increasing the friction between the foot and the floor and is achieved through the combination of aggregates within the floor.

According to the UK Health and Safety Executive (HSE), there are over 35,000 injuries per year caused by slips and trips in the UK alone. This accounts for approximately 1 of every 3 major non-fatal injuries, as well as approximately 1 in every 5 injuries in the workplace. Floor coverings having higher coefficients of friction are one way of trying to reduce the number of such injuries. A number of floor coverings providing slip-resistance properties are currently commercially available.

The main PVC-based flooring products currently available on the market with sustainable slip properties are spread coated decorative products and spread-coated products with laminated print films with a clear wear layer, which is a transparent layer within the layering of the flooring. An example of such a product is Forest Fx by Polyflor Limited. Other PVC-based products are available with temporary slip resistant properties such as Luxury Vinyl Tiles (LVTs).

PVC spread-coated safety products, such as Polysafe Standard by Polyflor Limited, are manufactured by encapsulating a backing layer such as Crenette® or glass fibre with a liquid PVC plastisol which is gelled or solidified using a heat source such as an oven or drum. Further spread coating of liquid PVC plastisol builds up the product gauge by layers. These layers can be made of pigmented or non-pigmented layers which can also contain decorative flakes and/or aggregates.

These aggregates can be colour co-ordinated or neutral in colour depending on the product specification. As the wear layers are built up, the aggregate is distributed evenly throughout in order to provide sustainable slip resistant properties during the usable life cycle of the product as it wears.

When this process has been repeated in order to provide the required thickness, it may be embossed with a specified pattern to provide further slip resistance properties. A final finishing coating to prevent dirt accumulation can be added if required and this can also contain micro-aggregates to provide further anti-slip properties.

Alternative PVC spread-coated products are those which can incorporate printed films. These are manufactured in a similar manner to the PVC spread coated safety products described above. The process also involves encapsulating a backing layer such as Crenette® or glass fibre with a PVC plastisol which is then gelled or solidified using a heat source such as an oven or drum. Further spread coating of the PVC plastisol builds up the product layers. However, in this technique, the decoration is provided by the lamination of a printed decorative film or a printed base layer.

The spread coated PVC plastisol wear layer is applied via spread coating to the print film surface and aggregate is then scattered into this liquid layer. The layer is solidified with the aggregate evenly distributed across and throughout the clear wear layer. The aggregate held within the clear wear layer will then provide sustainable slip properties during the usable life time of the product as it wears.

The product may then be embossed with a pattern to provide further slip resistance properties. A final finish coating to prevent dirt accumulation, etc., can be added if required, and this finish coating can also contain micro-aggregates to provide further anti-slip properties.

All spread-coated products are typically available in 20 m roll format at 2 m wide and are flexible products.

There are also PVC LVTs, such as Expona Commercial by Polyflor Limited, which are manufactured for providing safety and slip-resistant flooring.

These products are made by a process which includes sandwiching pre-manufactured layers of a PVC product (printed film, pigmented filled PVC and a transparent PVC clear wear layer) either in a batch process or in a continuous lamination process. The products typically consist of one or more backing layers, one or more load bearing mid layers, a decorative print film layer, a transparent clear wear layer and a surface treatment using e.g. polyurethane (PU).

The batch process uses pre-cut manufactured product layers which are laid on top of each other and then consolidated using a hot press. The safety flooring element of an LVT product is provided by a final hot pressing with an embossing plate to provide an embossed finish. The LVT is then coated using a polyurethane liquid containing a suspension of suitably sized (micro)aggregates to provide temporary slip resistance properties. This slip resistance is lost when the PU coating and aggregate is worn away during initial use. The product is then cut to size in order to provide the finished item. This product is incapable of providing sustainable slip resistance.

LVT flooring products can also be made using a continuous lamination process which involves the feeding of pre-made rolls of PVC films and/or extruded pre-manufactured product layers in to a heated rotating press roller to provide a consolidated product. The product is then embossed using an emboss roller and coated with a polyurethane liquid containing a suspension of suitably sized micro aggregates to provide slip resistance. The product is then cut to size in order to provide the finished item.

LVTs are typically available in the form of tiles having dimensions of, for example, 30.48 cm x 91.44 cm (12 x 36 inches), 30.48 cm x 60.96 cm (12 x 24 inches), 45.72 cm x 45.72 cm (18 x 18 inches), etc., and also in the form of planks having dimensions of, for example, 10.16 cm x 91.44 cm (4 x 36 inches) or 15.24 cm x 91.44 cm (6 x 36 inches), etc.

However, the slip resistant safety flooring LVTs which are currently manufactured do not provide slip resistance which is sustainable throughout the life of the product. In the existing commercially available LVT flooring products, the slip resistance is only provided by the surface coating of micro aggregates and the embossed surface pattern. Once these slip resistance provisions have worn away during initial use, the remaining clear wear layer underneath does not provide any enhanced slip resistance. The LVTs therefore have a restricted lifespan and over time cease to be adequate for providing the levels of safety required.

It would therefore be desirable to provide a floor covering which is able to provide the required slip-resistance properties that are sustainable over prolonged periods of time, and throughout the lifetime of the product.

Therefore, in accordance with the present invention there is provided a vinyl tile floor covering having sustainable slip resistance, the floor covering comprising at least two polymer layers that are laminated together to form one layer, wherein particles of an aggregate material having an average particle size of between 0.05 mm to 1.0 mm are located between the at least two polymer layers before they are laminated together, and after lamination, the particles are located within each of the at least two polymer layers, and wherein the polymer layers each have a gauge between 0.1 mm and 1.0 mm.

The at least two layers of a polymer material are laminated together to form one layer. During production, the particles of the aggregate material are located between the layers, while after lamination, in the finished product, the particles of the aggregate material are located within the one layer.

According to one embodiment, the at least two layers of a polymer material may be substantially transparent, or may alternatively be opaque or comprise a slight pigmentation.

According to one embodiment, the floor covering is an LVT floor covering.

In order to maintain sustainable slip resistance properties throughout the enhanced lifetime of the product of the invention, the particles of aggregate material are incorporated within the polymer layers of the floor covering, between and/or within the two layers of a polymer material, and are not simply applied over the top on or in the upper coating layer where they will wear off over a short period of time. Over time, the particles of aggregate material will be released during the life cycle wear of the two layers of a polymer material. As would be expected, the wear layer itself is gradually worn away and as this process occurs further particles encapsulated throughout the clear wear layer are then made available at the surface of the wear layer to replace the released particles of aggregate material and provide the continued slip resistance properties. The consistent availability of these particles ensures sustainable slip resistance is maintained throughout the products life cycle. This is the basis of EN 13845 test annex D which is discussed further in this document. The floor covering of the invention is particularly efficient in providing resistance against slipping when the floor is wet, in order to meet UK Health and Safety requirements.

If there are more than two layers of a polymer material, the particles of aggregate material are typically located between and/or within the upper layers thereof.

As used herein, the wording 'layers of a polymer material' may be used interchangeably with the wording 'clear wear layer'. The clear wear layer represents a collective name for the combination of the layers of the polymer material with the particles of aggregate material. However, while the wording clear wear layer' is used for convenience, it will be appreciated that, as detailed above, that the clear wear layer may be substantially transparent, or may alternatively be opaque or comprise a slight pigmentation.

According to one embodiment, this slip resistance may also be further combined with a surface emboss and a polymer coating containing micro-aggregates to provide a rougher surface/harder friction surface to 'bite into the under surface of the footwear when walked upon.

The particles of an aggregate material have an average particle size or macro size distribution of between 0.05 mm to 1.0 mm or even larger, or more typically between 0.5 mm to 0.70 mm, or more typically still between 0.59 mm to 0.70 mm.

Typically, the polymer layers each have a gauge between 0.2 mm and 0.6 mm, or between 0.25 mm and 0.55 mm. The gauge of each of the layers may be the same or may be different. The total gauge of the final clear wear later is typically between 0.2 mm and 2.0 mm.

By the term 'gauge' herein, it is meant the combined thickness of the polymer layers, or the individual thickness of each polymer layer.

The particle size of the aggregate is important as it is specifically sized in proportion to the gauge of the transparent polymer layers, the cosmetic appearance of the product and also for the protrusion through the clear wear layer in order to provide the required low slip properties during the wear life of the floor covering. Typically the particles have an average dimension at their widest points which is between 85% and 102% of the thickness of the final clear wear layer gauge.

Typically, the polymer layers contained within the LVT each comprise polyvinyl chloride (PVC), although other alternative materials which would also be suitable for this purpose would be apparent to the person skilled in the art. Any polymeric material may be comprised in the polymer layers, both natural and manufactured, such as, but not limited to, acrylic, PVC blends, polyurethane, polyethylene, polypropylene, polyolefin, vinyl acetate, rubber etc.

This invention is specifically designed to meet the criteria of the standards stated in this document. In order to test the efficiency of sustainable slip resistant safety flooring, testing is performed against the present European Standard EN13845:2005.

*EN 13845: 2005 (E) Resilient floor coverings - Polyvinyl chloride floor coverings with particle based enhanced slip resistance - Specification.*

This Specification references EN test methods to measure mechanical and physical properties for PVC flooring. However, two other test methods are stated which are relevant to sustainable slip resistant flooring. These tests are Annex C - Determination of slip resistance, and Annex D - Determination of wear resistance.

### Annex C

Determination of Slip Resistance, otherwise known as Ramp Testing. This describes a ramp test which is the means of assessing the slipperiness of floors under wet conditions. An operator moves backwards and forwards in an upright position on the floor covering to be tested, the angle of which starting from the horizontal is increased up to the point (angle of inclination) at which the operator become insecure. The angle of inclination is determined on a floor covering, which is subjected to a continuous stream of water containing a wetting agent. The angle of inclination is used to assess the enhanced slip resistance properties. The required ramp classification for a continuous flow of water with wetting agent with a Shoe with 4S rubber soles is Class ESf:≥20°, *i.e.* that the operator is able to maintain his or her footing on the ramp even when the ramp is inclined at an angle of greater than 20°.

### Annex D

Determination of wear resistance. This describes a method of abrading a test sample for a given number of cycles and determining the degree of wear to the sample by ensuring the percentage loss of identifiable particles is within the specified limit. Thus confirming the initial slip resistant potential of the product is sustained throughout the lifetime of the product.

**Table 1**

| Wear class | Revolutions | Reduction in identifiable particles |
|---|---|---|
| 21/22/22 + 23/31 | 20,000 | ≤10% |
| 32/41 | 30,000 | ≤10% |
| 33/42 | 40,000 | ≤10% |
| 34/43 | 50,000 | ≤10% |

Additionally, the UK Health and Safety Executive (HSE) provides guidelines for the testing of slip-resistant floor coverings. The two main tests recommended by the HSE are the Pendulum Test and surface micro-roughness meter.

### Pendulum Testing

A Pendulum test (following the guidance of the UK Slip Resistance Group Guidelines 2005) is employed in order to simulate the act of a bare foot or user with soft soled footwear slipping on a floor. Products should achieve a Pendulum Test Value (PTV) of 36 or above to achieve a low slip risk potential, as shown in Table 2, and this slip resistance should be assured throughout the guaranteed life of the product.

**Table 2**

| Pendulum Test Value (PTV) (Wet Test Using Slider 96/4S Rubber) | Slip Risk Potential |
|---|---|
| 0-24 | High |
| 25-35 | Moderate |
| 36+ | Low |

### Surface Microroughness

This test is also favoured by the HSE and should be used in conjunction with the pendulum test. It involves measuring the total surface micro-roughness of the flooring with a surface roughness meter, with the levels of surface micro-roughness corresponding to levels of slip resistance, as shown in Table 3. A mean value of several peak to valley measurements is electronically calculated on the surface by tracing a needle over the floor at various points. This measurement is felt to be a good predictor of slip performance.

**Table 3**

| Rz Micro Roughness | Slip Risk Potential |
|---|---|
| Below 10 µm | High |
| 10-20 µm | Moderate |
| Greater than 20 µm | Low |

In order to cope with different contaminant spillages of various process materials, the surface roughness of the flooring must be sufficient in order to penetrate the wet contaminants between a shoe sole and the floor that prevents solid-to-solid contact. The requirement for surface roughness of the floor is governed by the viscosity level of liquid contaminants in the application area, as shown in Table 4.

**Table 4**

| Minimum Rz Roughness Levels | | |
|---|---|---|
| Contaminant Viscosity | Contaminant | Minimum Rz Floor Roughness |
| <1 | Clean water, Coffee, Soft Drinks | 20 µm |
| 1 -5 | Milk, Soap Solution | 45 µm |
| 5-30 | Cooking Stock | 60 µm |
| 30-50 | Motor Oil, Olive Oil | 70 µm |
| >50 | Gear Oil, Margarine | Above 70 µm |

Additional testing beyond that called for in EN 13 845:2005 has also taken place to ensure sustainable slip resistance is maintained during the lifecycle of the products.

Products manufactured using this invention have been tested at an independent test house using equipment specifically designed to replicate the wear pattern and forces produced by a pedestrian walking. Factors including typical pedestrian weight loading and unloading plus the twisting moments experienced during the change in direction are all replicated during this test.

Samples have been tested to replicate 1,000,000 footsteps which the independent test house estimates would replicate more than 10 years of use in a typical corridor of a width of 2.44 m (8 feet) in a large office environment.

The process for manufacturing the floor covering of the invention follows a similar general process route as described above for LVT flooring products, and involves assembly of pre-manufactured layers including a backing layer, a load bearing mid layer, a decorative print film layer, a clear wear layer and a polyurethane surface treatment layer. The polyurethane surface treatment layer also contains particles of an aggregate material as in the conventional LVT flooring products.

However, in the product of the invention it is the clear wear layer which will provide sustainable slip properties throughout the lifetime of the product. This clear wear layer consists of one or more pre-made films or layers of a polymer material, each layer having a gauge of between 0.1 mm and 1.0 mm, and sandwiched between and/or within the films are aggregate particles of a specified macro size distribution as defined hereinabove. This lamination of layers of a polymer material and aggregate particles located between and/or within these layers creates an effective slip-resistant clear wear layer.

In order to provide slip resistance, a particulate material having a high coefficient of friction is used. According to one embodiment, the particulate material having a high coefficient of friction is aluminium oxide, such as white or brown aluminium oxide, as it is effective while at the same time having a low visual impact on the finished product and can be virtually visually indistinguishable in the finished product if required.

However, it will be readily apparent to the skilled person that any non-coated inorganic or organic particles having a high coefficient of friction will be able to achieve slip resistance. Non-limiting examples of other such particles include inorganic particles such as silicon carbide, quartz, crushed glass, glass spheres, glass bubbles, silica, ceramic particles, or ground minerals, or organic particles such as polyolefin, ionomer, rubber particles, polyester, nylon, acrylate polymer, polycarbonate, polymethylene, fluoropolymer, styrenated polymer, polyurethane, core-shell particles, or high temperature polymers such as polyether ether ketone (PEEK), polyether ketone (PEK) and polyether sulfone (PES).

The gauges of the laminated polymer layers and size distribution of the aggregate particles may vary from product to product as different product classifications require different gauges of clear wear layer. Accordingly, the respective dimensions and sizes of the gauge and aggregate particles will vary depending upon the specific floor covering being manufactured and the type of establishment it is intended to be used in. This variation will be apparent to the skilled person.

The lamination of aggregate particles between and/or within films or layers of a polymer material for the use in LVT flooring manufacture in order to provide sustained slip properties is a concept which has not before been explored.

The particles of the particulate material are typically distributed across the covering in an amount of about 50-300 g/m², typically about 110 g/m². The distribution is typically substantially evenly distributed throughout the floor covering.

The combination of a transparent wear layer and the clear particulate material allows any floor designs situated under the clear wear layer to be highly visible, without being obscured by particles, as is the case with some other slip-resistant floor coverings.

The floor covering of the invention has been specifically designed to be EN13845 and UK HSE compliant, *i.e.* to have a slip classification of ESf:≥20° and also having a rating of 36 or more in the HSE PTV, and 20 µm or more in the surface roughness requirement, all of which values represent a low slip potential. Retention of the slip resistant particles should also be compliant to the required number of wear cycles for the wear class without the reduction of <10% of identifiable particles.

According to a further embodiment, the floor covering may incorporate a bacteriostat material to inhibit or prevent the growth of fungus and/or bacteria, and/or it may incorporate a UV stabilising material and/or a flow aid such as fused silica. Typically, any bacteriostat material would be incorporated in the clear wear layer. The clear wear layer may also comprise one or more substances selected from a plasticiser, a stabiliser or an anti-static agent.

The floor covering of the invention is primarily intended for use in residential and commercial establishments where sustainable slip-resistance is an important consideration, and/or for areas which are normally dry but are liable to be subject to liquid spillages, making the sustainable slip-resistant property of the covering an important consideration. This is particularly the case in establishments such as homes, schools, hospitals, care homes, laboratories, shops, cafes and restaurants, sports centres, community buildings, and reception/foyer areas of buildings.

Furthermore, it is also envisaged within the scope of the present invention that the floor covering is not only a flooring product in its own right, but it can be laminated to other substrates (such as, but not limited to, foam) to form products such as but not restricted to acoustic, loose lay or lockable flooring products.

According to another embodiment of the invention, there is also provided a method of manufacturing a floor covering having sustainable slip resistance as derived in any of the claims 1-7 as defined herein, comprising the steps of:
i) providing a first polymer layer and a second polymer layer and maintaining them under a desired level of tension;
ii) applying heat to the layers;
iii) contacting particles of an aggregate material having a particle size of between 0.05 mm to 1.0 mm on a surface of the first polymer layer;
iv) contacting the second polymer layer with the particles of aggregate material and the first polymer layer such that the particles of aggregate material are sandwiched between and/or within the first and second polymer layers; and
v) applying pressure, and applying heat at a temperature of between 150°C to 190°C to the layers,
wherein the method is carried out using a continuous lamination line.

It is to be noted that where mention is made of the application of heat within a particular temperature range, this is referring to the temperature of the applied heat and not necessarily to the temperature the component parts of the floor covering reach during manufacture.

Typically, the desired level of tension in step (i) is at least 10 N/m², more typically between 50 to 200 N/m².

In step (ii), the heat is typically applied in the range of 80° to 160°C.

In step (v), the skilled person is aware of the requisite levels of heat and pressure which are required to laminate the layers of the polymer material.

The heating may typically be carried out using a heated roller or one or more infra-red heaters.

The method for manufacturing the floor covering of the invention is not as straightforward as simply using existing methods for making LVT flooring products while also incorporating the polymer layers with the aggregate particles in between.

In order to manufacture the floor covering of the invention, a number of technical issues regarding the production required addressing.

There were many problems which required solving in order to obtain a sustainable slip LVT product. Accurate scattering of the particles can be easily obtained using a pin roller device. However, the fixing of the aggregates to the clear wear layer to enable handling is a problem which needed to be solved. If the aggregate is not fixed in place and the clear wear layer sheet is moved as is required during the assembly of the LVT prior to pressing, the unfixed aggregate is free to move and can pool into pockets. The even distribution of the aggregate is then not available, which in turn leads to undesirable non-uniform slip properties across the finished flooring product.

This fixing of the aggregate in place to ensure the accurate distribution, whilst ensuring the aggregate was also distributed throughout the clear wear layer gauge, was a requirement to be solved in order to produce a suitable process and product to provide sustainable and uniform slip resistance.

As described above, current non-slip LVTs contain aggregates between the two polymer layers, or between the top two or more polymer layers where there are more than two layers, and not throughout the whole gauge of the clear wear layer.

The ability to produce a clear wear layer with aggregate evenly distributed across the LVT and throughout the clear wear layer requires the accurate heating of these films. The films, which can be of different gauges, will therefore change dimension at different rates when heated. The final product requires the films to be suitably laminated together and be crease free and bubble free in order to produce an acceptable product.

The selection of the correct aggregate particle size and accurate pressing to enable the distribution of the particles throughout the clear wear layer(s) also required careful experimentation and design in order to control and achieve the required product. Over-processing from excess heating of the clear wear layer(s) can result in a discoloured wear layer. On the other hand, under-processing from a lack of heat can result in low lamination strength of the clear wear layers or even partial lamination which results in loose aggregate. Conversely, faults can occur with excessive lamination pressure and heat being applied which can reduce the final wear layer gauge to that below the specified requirement for the product. Excessive lamination pressure and heat can also produce a product where the aggregate are pushed through the laminated clear wear layer and final product is achieved with an orientated layer of aggregate along a single plane. Accurate and controlled lamination pressures ensure an even distribution though out the laminated clear wear layer. Additional assessment of the required heat and pressure also needed to be considered when the 'laid up' product is pressed to achieve the final product in a daylight press or a continuous lamination line.

According to one embodiment of the invention, the floor covering may be manufactured as follows:
The pre-made layers of the polymer material are unwound at a pre-set tension, pre-heated using infra-red heaters or heater rollers, and then the selected aggregate is evenly distributed using a device such as a pin roller scatter coater across the web of one of the layers. The layer and aggregates can then be heated again using an IR heater. The second polymer layer is introduced on top of the combined lower polymer layer and aggregate layer at the lamination drum entry nip which is provided with a specified nip pressure. This lamination drum is heated to a temperature between 150-190°C and is driven at a controlled speed in order to ensure creasing does not occur and web tension is maintained without altering the gauge of the films before and after lamination. The product is released from the heated drum via another adjustable rotating nip roller and then cooled using a cooling drum array. The laminated product can then be cut to a predetermined size or wound into rolls for future conversion.

Manufacture of the floor covering takes place with the assembly of layers which have been cut to size to match the finished product and daylight press whilst allowing for a scrap trim allowance factor. The first assembly starting point is the backing embossed plate followed by the PVC backing sheet, PVC mid layer sheet, printed film sheet, clear wear layer sheet, release film sheet and then the embossing plate.

There is also a potential to incorporate this process in to an existing continuous lamination line for LVTs in order to make continuous safety LVTs, via the simple addition of one or more dual let off stations for each of the two clear wear layer layers and a duel winding station for the finished products.

Due to the specified dimensions of the aggregate in relation to the gauge of the clear wear layer, the aggregate is laminated and held in place between the films and these aggregates also penetrate the films. Tests have confirmed that as the clear wear layer is worn over time, a suitable amount of aggregate is held in place and is continuously protruding through the top surface of the wear layer. This provides sustained slip properties throughout the enhanced life cycle of the product.

Also provided in accordance with the invention is a method of providing slip resistance comprising using a floor covering according to the invention.

The invention will now be described further by way of example with reference to the following Figure which is intended to be illustrative only and in no way limiting upon the scope of the invention.

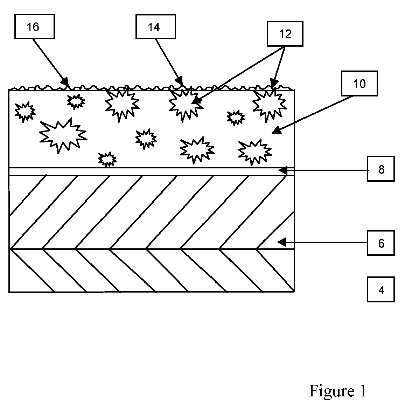

Figure 1 shows an example of a floor covering 2 in accordance with the invention. The floor covering contains a backing layer 4, on top of which is a mid-layer 6. A print film layer 8 lies on top of the mid-layer 6. On top of the print film layer 8 is the clear wear layer 10, containing the particles of aggregate material 12 between two or more layers of a transparent polymer material. Some of the particles of aggregate material 12 extend out of the clear wear layer 10, giving the desired slip-resistance. A layer of emboss 14 is added on top of the clear wear layer 10, followed by a coating of polyurethane 16 which itself contains particles of a micro-aggregate.

## Claims

1. A vinyl tile floor covering having sustainable slip resistance, the floor covering comprising at least two polymer layers that are laminated together to form one layer, wherein particles of an aggregate material having an average particle size of between 0.05 mm to 1.0 mm are located between the at least two polymer layers before they are laminated together, and after lamination, the particles are located within each of the at least two polymer layers and are evenly distributed throughout the laminated layer, and wherein the polymer layers each have a gauge between 0.1 mm and 1.0 mm.

2. A floor covering according to claim 1, wherein the particles of an aggregate material have an average particle size of between 0.1 mm to 1.0 mm.

3. A floor covering according to claim 1 or claim 2, wherein the polymer layers have a combined gauge between 0.2 mm and 2.0 mm.

4. A floor covering according to any preceding claim, wherein the polymer layers each have a gauge between 0.2 mm and 0.6 mm.

5. A floor covering according to any preceding claim, wherein the polymer layers comprise polyvinyl chloride.

6. A floor covering according to any preceding claim, wherein the particulate material is one or more selected from inorganic particles or organic particles.

7. A floor covering according to claim 6, wherein the inorganic particles comprise one or more selected from aluminium oxide, silicon carbide, quartz, crushed glass, glass spheres, glass bubbles, silica, ceramic particles, or ground minerals; and/or the organic particles comprise one or more selected from polyolefin, ionomer, rubber particles, polyester, nylon, acrylate polymer, polycarbonate, polymethylene, fluoropolymer, styrenated polymer, polyurethane, core-shell particles, polyether ether ketone (PEEK), polyether ketone (PEK) and polyether sulfone (PES).

8. A method of manufacturing a floor covering having slip resistance according to any of claims 1-7, comprising the steps of:
i) providing a first polymer layer and a second polymer layer and maintaining them under a desired level of tension;
ii) applying heat to the layers;
iii) contacting particles of an aggregate material having a particle size of between 0.05 mm to 1.0 mm on a surface of the first polymer layer;
iv) contacting the second polymer layer with the particles of aggregate material and the first polymer layer such that the particles of aggregate material are sandwiched between the first and second polymer layers; and
v) applying pressure, and heat at a temperature of between 150°C to 190°C to the layers;
wherein the method is carried out using a continuous lamination line.

9. A method according to claim 8, wherein the desired level of tension in step (i) is at least 10 N/m²_{.}

10. A method according to claim 9, wherein the desired level of tension in step (i) is between 50 to 200 N/m².

11. A method according to any of claims 8-10, wherein in step (ii) the heat is applied in the range of 80° to 160°C.

12. A method of providing slip resistance comprising using a floor covering according to any of claims 1-7.

## Patentansprüche

1. Vinylfliesen-Bodenbelag mit nachhaltiger Rutschfestigkeit, wobei der Bodenbelag zumindest zwei Polymerschichten umfasst, die miteinander laminiert sind, um eine Schicht zu bilden, wobei Partikel eines Zuschlagstoffs mit einer durchschnittlichen Partikelgröße von zwischen 0,05 mm bis 1,0 mm zwischen den zumindest zwei Polymerschichten angeordnet werden, bevor diese miteinander laminiert werden, wobei die Partikel nach dem Laminieren innerhalb jeder der zumindest zwei Polymerschichten angeordnet sind und gleichmäßig über die gesamte laminierte Schicht verteilt sind, und wobei die Polymerschichten jeweils eine Dicke zwischen 0,1 mm und 1,0 mm aufweisen.

2. Bodenbelag nach Anspruch 1, wobei die Partikel eines Zuschlagstoffs eine durchschnittliche Partikelgröße von zwischen 0,1 mm bis 1,0 mm aufweisen.

3. Bodenbelag nach Anspruch 1 oder Anspruch 2, wobei die Polymerschichten eine kombinierte Dicke zwischen 0,2 mm und 2,0 mm aufweisen.

4. Bodenbelag nach einem der vorhergehenden Ansprüche, wobei die Polymerschichten jeweils eine Dicke zwischen 0,2 mm und 0,6 mm aufweisen.

5. Bodenbelag nach einem der vorhergehenden Ansprüche, wobei die Polymerschichten Polyvinylchlorid umfassen.

6. Bodenbelag nach einem der vorhergehenden Ansprüche, wobei das Partikelmaterial aus einem oder mehreren Materialien besteht, die aus anorganischen Partikeln oder organischen Partikeln ausgewählt sind.

7. Bodenbelag nach Anspruch 6, wobei die anorganischen Partikel aus einem oder mehreren Materialien bestehen, die aus Aluminiumoxid, Siliziumkarbid, Quarz, Glasbruch, Glaskugeln, Glasbläschen, Kieselerde, Keramikpartikel oder gemahlene Mineralien ausgewählt sind; und/oder die organischen Partikel aus einem oder mehreren Materialien bestehen, die aus Polyolefin, Ionomer, Kautschukpartikel, Polyester, Nylon, Acrylatpolymer, Polycarbonat, Polymethylen, Fluorpolymer, Styrolpolymer, Polyurethan, Kern-Schalen-Partikel, Polyetheretherketon (PEEK), Polyetherketon (PEK) und Polyethersulfon (PES) ausgewählt sind.

8. Verfahren zur Herstellung eines rutschfesten Bodenbelags nach einem der Ansprüche 1 bis 7, umfassend die folgenden Schritte:
i) Bereitstellen einer ersten Polymerschicht und einer zweiten Polymerschicht und Halten unter einem gewünschten Spannungsniveau;
ii) Zuführen von Wärme an die Schichten;
iii) Aufbringen von Partikeln eines Zuschlagstoffs mit einer Partikelgröße von zwischen etwa 0,05 mm bis etwa 1,0 mm auf eine Oberfläche der ersten Polymerschicht;
iv) Inkontaktbringen der zweiten Polymerschicht mit den Partikeln des Zuschlagstoffs und der ersten Polymerschicht, so dass die Partikel des Zuschlagstoffs zwischen der ersten und der zweiten Polymerschichten eingelagert sind; und
v) Ausüben von Druck unter Wärmezufuhr bei einer Temperatur zwischen etwa 150°C bis etwa 190°C auf die Schichten;
wobei das Verfahren unter Verwendung einer Endlos-Laminierungslinie durchgeführt wird.

9. Verfahren nach Anspruch 8, wobei das gewünschte Spannungsniveau in Schritt (i) zumindest etwa 10 N/m² beträgt.

10. Verfahren nach Anspruch 9, wobei das gewünschte Spannungsniveau in Schritt (i) zwischen etwa 50 bis etwa 200 N/m² liegt.

11. Verfahren nach einem der Ansprüche 8 bis 10, wobei in Schritt (ii) die Wärme in dem Bereich von etwa 80 bis etwa 160°C zugeführt wird.

12. Verfahren zur Bereitstellung von Rutschfestigkeit, umfassend die Verwendung eines Bodenbelags nach einem der Ansprüche 1 bis 7.

## Revendications

1. Revêtement de sol de type carreaux vinyliques présentant un pouvoir antidérapant durable, le revêtement de sol comprenant au moins deux couches de polymère qui sont collées l'une contre l'autre pour former une couche, dans lequel des particules d'un matériau agrégé présentant une taille moyenne des particules située entre 0,05 mm et 1,0 mm sont situées entre les au moins deux couches de polymère avant qu'elles ne soient collées l'une contre l'autre, et après le contre-collage, les particules sont situées à l'intérieur de chacune des au moins deux couches de polymère et sont réparties de manière homogène dans toute la couche stratifiée, et dans lequel les couches de polymère présentent chacune une épaisseur située entre 0,1 mm et 1,0 mm.

2. Revêtement de sol selon la revendication 1, dans lequel les particules d'un matériau agrégé présentent une taille moyenne des particules située entre 0,1 mm et 1,0 mm.

3. Revêtement de sol selon la revendication 1 ou la revendication 2, dans lequel les couches de polymère présentent une épaisseur combinée située entre 0,2 mm et 2,0 mm.

4. Revêtement de sol selon l'une quelconque des revendications précédentes, dans lequel les couches de polymère présentent chacune une épaisseur située entre 0,2 mm et 0,6 mm.

5. Revêtement de sol selon l'une quelconque des revendications précédentes, dans lequel les couches de polymère comprennent du chlorure de polyvinyle.

6. Revêtement de sol selon l'une quelconque des revendications précédentes, dans lequel le matériau particulaire est un ou plusieurs matériaux choisis parmi les particules inorganiques ou les particules organiques.

7. Revêtement de sol selon la revendication 6, dans lequel les particules inorganiques comprennent un ou plusieurs composés choisis parmi l'oxyde d'aluminium, le carbure de silicium, le quartz, le verre pilé, les sphères de verre, les bulles de verre, la silice, les particules de céramique ou les minéraux broyés ; et/ou les particules organiques comprennent un ou plusieurs composés choisis parmi une polyoléfine, un ionomère, des particules de caoutchouc, le polyester, le nylon, un polymère d'acrylate, le polycarbonate, le polyméthylène, un fluoropolymère, un polymère styréné, le polyuréthane, les particules à noyau-enveloppe, la polyéther éther cétone (PEEK), la polyéther cétone (PEK) et la polyéther sulfone (PES).

8. Procédé de fabrication d'un revêtement de sol présentant un pouvoir antidérapant selon l'une quelconque des revendications 1 à 7, comprenant les étapes suivantes :
i) apport d'une première couche de polymère et d'une deuxième couche de polymère et maintien de celles-ci à un niveau de tension souhaité ;
ii) application de chaleur sur les couches ;
iii) mise en contact des particules d'un matériau agrégé présentant une taille des particules située entre 0,05 mm et 1,0 mm sur une surface de la première couche de polymère ;
iv) mise en contact de la deuxième couche de polymère avec les particules de matériau agrégé et la première couche de polymère de manière à ce que les particules de matériau agrégé soient intercalées entre les première et deuxième couches de polymère ; et
v) application de pression et de chaleur à une température située entre 150 °C et 190 °C sur les couches ;
lequel procédé est réalisé à l'aide d'une ligne de contre-collage continue.

9. Procédé selon la revendication 8, dans lequel le niveau de tension souhaité au cours de l'étape (i) est d'au moins 10 N/m².

10. Procédé selon la revendication 9, dans lequel le niveau de tension souhaité au cours de l'étape (i) est situé entre 50 et 200 N/m².

11. Procédé selon l'une quelconque des revendications 8 à 10, dans lequel, au cours de l'étape (ii), la chaleur est appliquée dans la plage de 80° à 160 °C.

12. Procédé consistant à conférer un pouvoir antidérapant comprenant l'utilisation d'un revêtement de sol selon l'une quelconque des revendications 1 à 7.
